(19) Europäisches Patentamt
European Patent Office
Office européen des brevets

(11) **EP 2 749 854 A1**

(12) **EUROPEAN PATENT APPLICATION**

(43) Date of publication:
**02.07.2014 Bulletin 2014/27**

(51) Int Cl.:
***G01F 25/00*** (2006.01)     ***G01F 1/84*** (2006.01)
***G01F 15/04*** (2006.01)

(21) Application number: **12306712.6**

(22) Date of filing: **28.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Service Pétroliers Schlumberger**
  **75007 Paris (FR)**
  Designated Contracting States:
  **FR**
• **Schlumberger Holdings Limited**
  **Tortola (VG)**
  Designated Contracting States:
  **GB NL**
• **Prad Research Development Limited**
  **Tortola (VG)**
  Designated Contracting States:
  **AT BE CH CY EE ES FI HR IS LI LU LV MC MK MT PT SE SM**
• **SCHLUMBERGER TECHNOLOGY B.V.**
  **2514 JG  Den Haag (NL)**
  Designated Contracting States:
  **AL BG CZ DE DK GR HU IE IT LT NO PL RO RS SI SK TR**

(72) Inventors:
• **Gouy, Laurence**
  **92142 Clamart (FR)**
• **Allouche, Francis**
  **92142 Clamart (FR)**

(74) Representative: **Rzaniak, Martin**
  **Schlumberger**
  **1, rue Henri Becquerel**
  **B.P. 202**
  **92142 Clamart (FR)**

(54) **Apparatus and method for calibration of coriolis meter for dry gas density measurement**

(57)     A computer system is described. The computer system is provided with a processor and a computer readable medium. The computer readable medium stores computer executable instructions that, when executed, cause the processor to receive a first reference density measured at a first pressure and a second reference density measured at a second pressure. The first and second reference densities are measured at a reference temperature. The computer system receives a first tube period measured at the first pressure and a second tube period measured at the second pressure for a Coriolis meter, with the first and second tube periods measured at the reference temperature. The computer system receives at least two test densities and at least two test periods. The test densities and the test periods are measured at at least two test temperatures. The computer system associates an offset and a temperature correction factor with the Coriolis meter.

FIG. 1

**Description**

**BACKGROUND**

Mass flow meters, also known as an inertial flow meter is a device that measures mass flow rate of a fluid traveling through a tube. For example, mass flow meters provide a measurement of the mass of material being transferred through a conduit. Similarly, densitometers provide a measurement of the density of material in a conduit. Mass flow meters provide a measurement of the density of the material within the tube.

The mass flow rate is calculated as the mass of the fluid passing through a fixed point per unit time. Volumetric flow rate is calculated by dividing the mass flow rate by the density of the fluid. When density remains constant, the relationship is simple. The relationship between the volumetric flow rate and mass flow rate becomes more complex where the fluid has varying density. Variables that change fluid density include temperature, pressure, and composition of the fluid, for example. Additionally, when the fluid presents a combination of phases, for instance where it has entrained bubbles, the relationship between volumetric flow rate and mass flow rate becomes more complex.

Coriolis meters are one type of mass flow meters. There are two basic configurations of Coriolis meters, curved tube and straight tube meters. Coriolis meters are mass flow meters based on the Coriolis Effect, in which material flowing through a tube becomes a radially traveling mass that is affected by a Coriolis force and therefore experiences an acceleration. Many Coriolis mass flow meters induce a Coriolis force by sinusoidally oscillating a conduit about a pivot axis orthogonal to the length of the tube. In such mass flow meters, the Coriolis reaction force experienced by the traveling fluid mass is transferred to the conduit itself and is manifested as a deflection or offset of the conduit in the direction of the Coriolis force vector in the plane of rotation.

Coriolis meters generally have one or more flow tubes, in either curved or straight configuration. The different flow tube configurations have a set of natural vibration modes, in the form of a bending, torsional, or coupled type. Fluid flows into the Coriolis meter from an adjacent pipe on an inlet side and is directed through the flow tube or tubes, exiting the Coriolis meter through an outlet side. The natural vibration modes of the vibrating, fluid filled system are defined in part by the combined mass of the flow tubes and the fluid within the flow tubes. Each flow tube is driven to oscillate at resonance in one of these natural modes.

Where there is no flow through the flowmeter, the points along the flow tube oscillate with identical phase. As fluid begins to flow, Coriolis accelerations cause each point along the flow tube to have a different phase. The phase on the inlet side of the flow tube lags the driver. Sensors can be placed on the flow tube to produce sinusoidal signals representative of the motion of the flow tube. The phase difference between two sensor signals is proportional to the mass flow rate of fluid through the flow tube. A complicating factor in this measurement is that the density of typical process fluids varies. Changes in density cause the frequencies of the natural modes to vary. Since the flowmeter's control system maintains resonance, the oscillation frequency varies in response. Mass flow rate in this situation is proportional to the ratio of phase difference and oscillation frequency.

Coriolis meters have been thought to have limited suitability to density measurement of gases because gases are less dense than liquids. Consequently, at the same flow velocities, smaller Coriolis accelerations are generated. This situation may warrant a higher sensitivity flow meter. A flow meter with conventional sensitivity could be used, if the flow velocity is increased to achieve the same Coriolis accelerations. Unfortunately, this leads to a flow meter having a sensitivity that is not constant. This sensitivity may be exacerbated in systems with multiphase flow including liquids and gas. The gas damps the system with the effect of reducing sensitivity to measurement. This damping effect can be so severe that the meter may not be able to perform flow measurements.

Methods exist for empirically derived correlations obtained by flowing combined gas and liquid flow streams having known mass percentages of the respective gas and liquid components through a Coriolis meter, as in U.S. Pat. No. 5,029,482. These correlations are then used to calculate the percentage of gas and the percentage of liquid in a combined gas and liquid flow stream of unknown gas and liquid percentages based on a direct Coriolis measurement of the total mass flow rate. However, this does not address remediation of the effects of gas damping in the system measurements.

Some Coriolis meters act as accurate densitometers for liquid, giving measurements accurate to within $\pm 0.5$ kg/m$^3$. However, manufacturers of these Coriolis meters do not provide specifications for gas densities below 200 kg/m$^3$, with some manufacturers not providing any gas density specification. Calibration methodologies provided for these Coriolis meters are directed for calibration for density measurements of liquids.

**SUMMARY**

This summary is provided to introduce a selection of concepts that are further described below in the detailed description. This summary is not intended to identify key or essential features of the claimed subject matter, nor is it intended to be used as an aid in limiting the scope of the claimed subject matter.

In one version, the present disclosure describes an apparatus for calibrating one or multiple Coriolis meter for measuring the density of dry gas. The apparatus is provided with a processor and a computer readable medium storing computer executable instructions. The computer readable medium is non-transitory and may be local to the processor. The computer executable instructions, when executed by the processor cause the processor to receive a first reference density measured at a first pressure and a second reference density measured at a second pressure, with the first reference density and the second reference density measured at a reference temperature. The first reference density and the second reference density are indicative of inert gas within a first flow tube and a second flow tube of a Coriolis meter to be calibrated. The computer executable instructions also cause the processor to receive a first tube period at the first pressure and a second tube period at the second pressure. The first tube period and the second tube period are measured at the reference temperature. The computer executable instructions further cause the processor to receive test densities and test periods. The test densities and the test periods are measured at test temperatures. The computer executable instructions may cause the processor to receive an offset and a temperature correction factor and to associate the offset and the temperature correction factor with a particular Coriolis meter.

In another embodiment, the present disclosure describes a method for calibrating Coriolis meters for measuring the density of dry gas. The method is performed by determining a first reference density for an inert gas at a first pressure and a second reference density for the inert gas at a second pressure. The first and second reference densities are determined at a reference temperature. A first tube period is determined at the first pressure and a second tube period is determined at the second pressure. The first and second tube periods are determined at the reference temperature. Test densities and test periods are recorded for test temperatures. An offset and a temperature correction factor are determined and associated with a processor in a Coriolis meter. The association can be created by using a unique identification code for the Coriolis meter. The offset and the temperature correction factor may be stored in the computer readable medium of the computer system along with the unique identification code associated with the Coriolis meter. The offset and the temperature correction factor may also be stored in or accessed by a processor of the Coriolis meter for use in calculating gas densities.

## BRIEF DESCRIPTION OF THE DRAWINGS

To assist those of ordinary skill in the relevant art in making and using the subject matter hereof, reference is made to the appended drawings, which are not intended to be drawn to scale, and in which like reference numerals are intended to refer to similar elements for consistency. For purposes of clarity, components may be labeled in certain ones of the drawings but not in each drawing.

Figure 1 shows a perspective view of a Coriolis meter that is calibrated in accordance with the present disclosure;

Figure 2 shows a schematic view of a core processor in accordance with the present disclosure;

Figure 3 shows a schematic view of a computer system in accordance with the present disclosure;

Figure 4 shows a diagram of a method of calibrating a Coriolis meter in accordance with the present disclosure; and

Figure 5 shows an embodiment of computer executable instructions in accordance with the present disclosure.

## DETAILED DESCRIPTION

Specific embodiments of the present disclosure will now be described in detail with reference to the accompanying drawings. It is to be understood that the various embodiments, although different, are not necessarily mutually exclusive. For example, a particular feature, structure, or characteristic described herein in connection with one embodiment may be implemented within other embodiments without departing from the spirit and scope of the present disclosure. Further, in the following detailed description of embodiments of the present disclosure, numerous specific details are set forth in order to provide a more thorough understanding of the present disclosure. However, it will be apparent to one of ordinary skill in the art that the embodiments disclosed herein may be practiced without these specific details. In other instances, well-known features have not been described in detail to avoid unnecessarily complicating the description.

It should also be noted that in the development of any such actual embodiment, numerous decisions specific to circumstance may be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The terminology and phraseology used herein is solely used for descriptive purposes and should not be construed as limiting in scope. Language such as "including," "comprising," "having," "containing," or "involving," and variations thereof, is intended to be broad and encompass the subject matter listed thereafter, equivalents, and additional subject matter not recited.

Furthermore, the description and examples are presented solely for the purpose of illustrating the different embodiments, and should not be construed as a limitation to the scope and applicability. While any composition or structure may be described herein as comprising certain materials, it should be understood that the composition could optionally comprise two or more different materials. In addition, the composition or structure can also comprise some components other than the ones already cited. The equipment, compositions and methods described herein may be used in any well operation. Examples include fracturing, acidizing, water control, chemical treatments, and wellbore fluid isolation and containment. Embodiments will be described for hydrocarbon production wells, but it is to be understood that they may be used for wells for production of other fluids, such as water or carbon dioxide, or, for example, for injection or storage wells.

It should also be understood that throughout this specification, when a range is described as being useful, or suitable, or the like, it is intended that any value within the range, including the end points, is to be considered as having been stated. Furthermore, each numerical value should be read once as modified by the term "about" (unless already expressly so modified) and then read again as not to be so modified unless otherwise stated in context. For example, "a range of from 1 to 10" is to be read as indicating each possible number along the continuum between about 1 and about 10. In other words, when a certain range is expressed, even if a few specific data points are explicitly identified or referred to within the range, or even when no data points are referred to within the range, it is to be understood that the inventors appreciate and understand that any data points within the range are to be considered to have been specified, and that the inventors have possession of the entire range and points within the range.

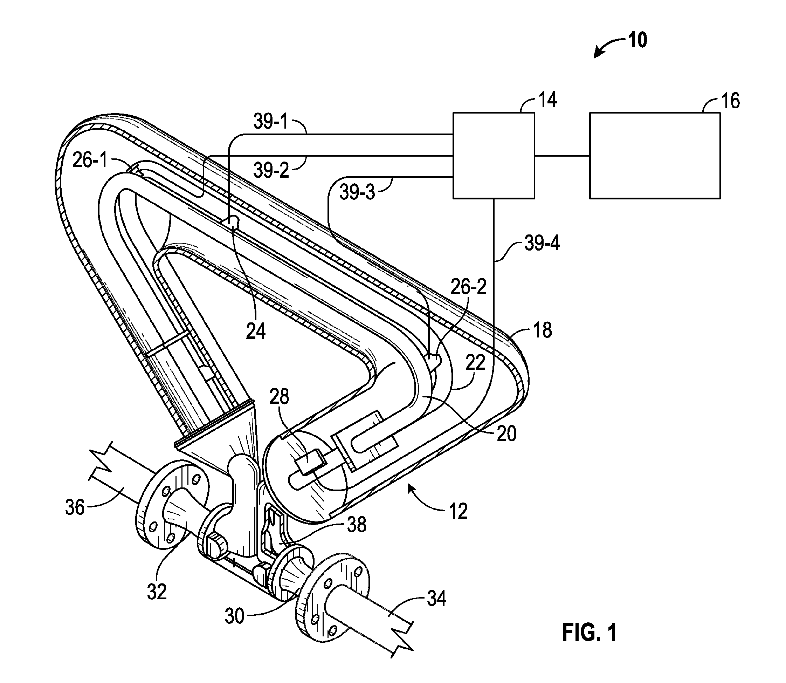

Referring now to Figure 1, a Coriolis meter calibration apparatus 10 is shown. The Coriolis meter calibration apparatus 10 may be provided with a Coriolis meter 12, a core processor 14, and a computer system 16. The Coriolis meter calibration apparatus 10 may enable changes in the calibration of the Coriolis meter 12 through modifications of parameters stored within and/or accessed by the core processor 14 by inputting data into the computer system 16.

The Coriolis meter 12 can be used to determine density and mass flow rates of gasses and liquids within the Coriolis meter 12. In this instance, a gaseous effluent will pass through the Coriolis meter 12. The Coriolis meter 12 is shown as a curved tube Coriolis meter. However, it will be understood by one skilled in the art that a straight tube Coriolis meter may also be used. The Coriolis meter 12 may comprise a housing 18, a first flow tube 20 and a second flow tube 22 within the housing 18, a drive coil 24 and pickoff coils 26-1 and 26-2 connected to one or more of the first flow tube 20 and the second flow tube 22, a resistance thermal device 28, a first process connection 30 and a second process connection 32 in fluid communication with the first flow tube 20 and the second flow tube 22, and the core processor 14. The effluent passes through the first and second flow tubes 20 and 22. The first and second flow tubes 20 and 22 are designed to be resistant to corrosion caused by the effluent. For example, the first and second flow tubes 20 and 22 may be constructed from stainless steel or nickel alloy depending on compatibility with the effluent.

The drive coil 24 may be used with a magnet to produce oscillation within the first flow tube 20 and the second flow tube 22. The oscillation of the first flow tube 20 and the second flow tube 22 may be substantially similar, without intervening Coriolis forces caused by fluid within the first and second flow tubes 20 and 22. The oscillation may cause vibration in the first and second flow tubes 20 and 22 at a constant amplitude in the range of 0.5 to 2 mm, for example.

The pickoff coils 26-1 and 26-2 may comprise one or more magnets and one or more electromagnetic detectors. The pickoff coils 26-1 and 26-2 may be connected to both the first flow tube 20 and the second flow tube 22 and positioned between the first and second flow tube 20 and 22 such that the pickoff coil 26-1 on the first flow tube 20 faces the pickoff coil 26-2 on the second flow tube 22. The pickoff coils 26-1 may produce a first signal representative of the velocity and position of the first and second flow tubes 20 and 22 at a given point in the oscillation. The pickoff coil 26-2 may produce a second signal representing the velocity and position of the first and second flow tubes 20 and 22 at the given point in the oscillation. The mass flow may be determined by measuring the phase difference between the first and second signals, by comparing the phase difference between the first and second signals.

The resistance thermal device 28 may provide a third signal indicative of the temperature of the first and second flow tubes 20 and 22. The resistance thermal device 28 may comprise a 100ohm platinum element, strain free element, thin film element, wire-wound element, or coiled element, for example.

The first process connection 30 and the second process connection 32 may be end connections or fittings. The first and second process connections 30 and 32 connect between a first piping 34 and a second piping 36, respectively. The first and second process connections 30 and 32 may be mated to the first and second piping 34 and 36, respectively, such that the fluid passes through the first piping 34, into the Coriolis meter 12, and into the second piping 36 and may remain within a fluid flow path without leaks. Within the first process connection 30 and the second process connection 32 may be a flow splitter 38. The flow splitter 38 may divide the fluid passing into the Coriolis meter 12 evenly between the first and second flow tubes 20 and 22, and then combine the fluid exiting the first and second flow tubes 20 and 22 into one stream to enter into the second piping 36.

The core processor 14 may be connected to the drive coil 24, the pickoff coils 26-1 and 26-2, and the resistance thermal device 28 via wiring 39-1, 39-2, 39-3, and 39-4 that may be at least partially contained within the housing 18. The core processor 14 may execute calculations to measure values, such as mass flow rate and density of the fluid within the Coriolis meter 12 using the first, second, and third signals, as discussed above. The core processor 14 may also transmit a signal to drive the drive coil 24 to produce the oscillations within the first and second flow tubes 20 and 22.

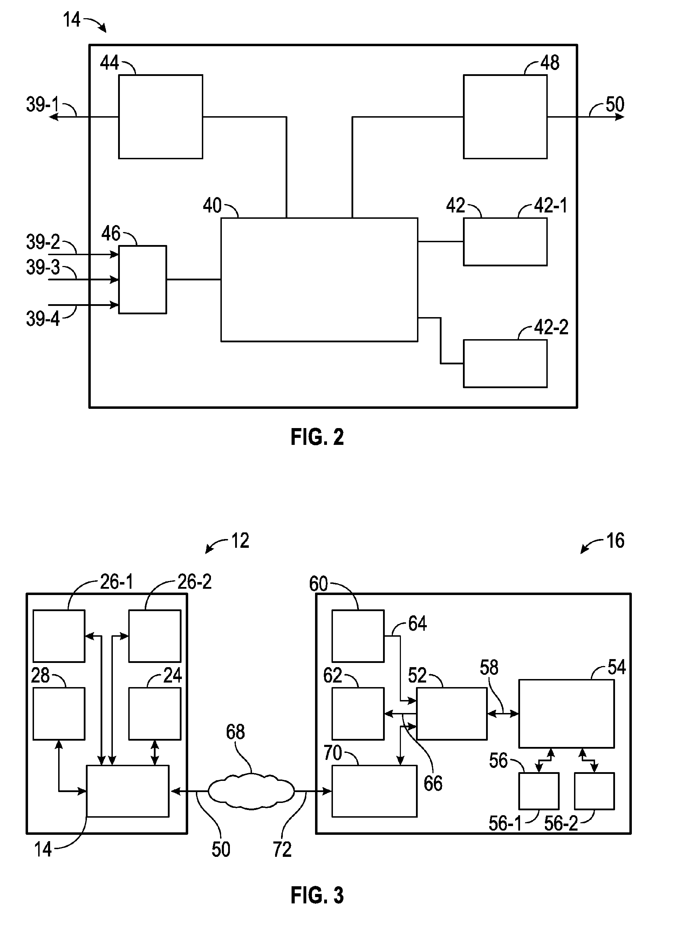

Referring now to Figure 2, in one embodiment, the core processor 14 may comprise one or more processor 40, one or more non-transitory computer readable medium 42, a digital-to-analogue converter (D/A) 44, one or more analogue-to-digital converter (A/D) 46, and one or more communications device 48. The processor 40 may be implemented as one or more digital signal processors, or any other suitable processor. The non-transitory computer readable medium 42 may be implemented as random access memory (RAM), a hard drive, a hard drive array, a solid state drive, a flash drive, a memory card, a CD-ROM, a DVD-ROM, a BLU-RAY, a floppy disk, an optical drive, and combinations thereof. As shown in Figure 2, the non-transitory computer readable medium 42 may be implemented as a read only memory (ROM) 42-1, and a RAM 42-2. The one or more D/A 44 may be any suitable digital-to-analogue converter, and may convert signals from the processor 40 into signals transmitted to and received by the drive coil 24. The A/D 46 may be implemented as any suitable analogue-to-digital converter, and may convert the first, second, and third signal received from the pickoff coils 26-1 and 26-2 and the resistance thermal device 28 into first, second, and third digital signals. The A/D 46 then transmits the first, second, and third digital signals to the processor 40. The communications device 48 may be implemented as a wired or wireless communications device such as a USB, WiFi, Bluetooth, or the like. The communications device 48 may communicate via a communication link 50 with the computer system 16 using a communications protocol. The communications link 50 can be a wired connection or a wireless connection. The communications protocol can be TCP/IP, Highway Addressable Remote Transducer (HART®), or WIRELESSHART®, for example.

Shown in Figure 3, is an example of the computer system 16 connected to the Coriolis meter 12. The computer system 16 may comprise a processor 52, a non-transitory computer readable medium 54, and computer executable instructions 56 stored on the non-transitory computer readable medium 54.

The processor 52 may be implemented as a single processor 52 or multiple processors 52 working together or independently to execute the computer executable instructions described herein. Embodiments of the processor 52 may include a digital signal processor (DSP), a central processing unit (CPU), a microprocessor, a multi-core processor, and combinations thereof. The processor 52 is coupled to the non-transitory computer readable medium 54. The non-transitory computer readable medium 54 can be implemented as RAM, ROM, flash memory or the like, and may take the form of a magnetic device, optical device or the like. The non-transitory computer readable medium 54 can be a single non-transitory computer readable medium, or multiple non-transitory computer readable medium functioning logically together or independently. The processor 52 is coupled to and configured to communicate with the non-transitory computer readable medium 54 via a path 58 which can be implemented as a data bus, for example. The processor 52 may be capable of communicating with an input device 60 and an output device 62 via paths 64 and 66, respectively. Paths 64 and 66 may be implemented similarly to, or differently from path 58. For example, paths 64 and 66 may have a same or different number of wires and may or may not include a multidrop topology, a daisy chain topology, or one or more switched hubs. The paths 58, 64 and 66 can be a serial topology, a parallel topology, a proprietary topology, or combination thereof. The processor 52 is further capable of interfacing and/or communicating with one or more network 68, via a communications device 70 and a communications link 72 such as by exchanging electronic, digital and/or optical signals via the communications device 70 using a network protocol such as TCP/IP or HART. The communications device 70 may be a wireless modem, digital subscriber line modem, cable modem, network bridge, Ethernet switch, direct wired connection or any other suitable communications device capable of communicating between the processor 52 and the network 68 and the Coriolis meter 12. It is to be understood that in certain embodiments using more than one processor 52, the processors 52 may be located remotely from one another, located in the same location, or comprising a unitary multicore processor (not shown). The processor 52 is capable of reading and/or executing the computer executable instructions 56 and/or creating, manipulating, altering, and storing computer data structures into the non-transitory computer readable medium 54.

The non-transitory computer readable medium 54 stores computer executable instructions 56 and may be implemented as random access memory (RAM), a hard drive, a hard drive array, a solid state drive, a flash drive, a memory card, a CD-ROM, a DVD-ROM, a BLU-RAY, a floppy disk, an optical drive, and combinations thereof. When more than one non-transitory computer readable medium 54 is used, one of the non-transitory computer readable mediums 54 may be located in the same physical location as the processor 52, and another one of the non-transitory computer readable mediums 54 may be located in location remote from the processor 52. The physical location of the non-transitory computer readable mediums 54 can be varied and the non-transitory computer readable medium 54 may be implemented as a "cloud memory," i.e. non-transitory computer readable medium 54 which is partially or completely based on or accessed using the network 68. In one embodiment, the non-transitory computer readable medium 54 stores a database accessible by the computer system 16 and/or one or more Coriolis meter 12. In this embodiment, the non-transitory computer readable medium 54 may store one or more calibration parameters accessible by the one or more Coriolis meter 12 for use in measurement of densities and mass flow rates of fluids and/or gas within the one or more Coriolis meter 12. The calibration parameters stored in the non-transitory computer readable medium 54 may be associated with certain ones of the one or more Coriolis meter 12.

The input device 60 transmits data to the processor 52, and can be implemented as a keyboard, a mouse, a touch-screen, a camera, a cellular phone, a tablet, a smart phone, a PDA, a microphone, a network adapter, a camera, a scanner, and combinations thereof. The input device 60 may be located in the same location as the processor 52, or may be remotely located and/or partially or completely network-based. The input device 60 communicates with the processor 52 via path 64.

The output device 62 transmits information from the processor 52 to a user, such that the information can be perceived by the user. For example, the output device 62 may be implemented as a server, a computer monitor, a cell phone, a tablet, a speaker, a website, a PDA, a fax, a printer, a projector, a laptop monitor, and combinations thereof. The output device 62 communicates with the processor 52 via the path 66.

The network 68 may permit bi-directional communication of information and/or data between the processor 52 and the network 68. The network 68 may interface with the processor 52 in a variety of ways, such as by optical and/or electronic interfaces, and may use a plurality of network topographies and protocols, such as Ethernet, TCP/IP, circuit switched paths, file transfer protocol, packet switched wide area networks, and combinations thereof. For example, the one or more network 68 may be implemented as the Internet, a LAN, a wide area network (WAN), a metropolitan network, a wireless network, a cellular network, a GSM-network, a CDMA network, a 3G network, a 4G network, a satellite network, a radio network, an optical network, a cable network, a public switched telephone network, an Ethernet network, and combinations thereof. The network 68 may use a variety of network protocols to permit bi-directional interface and communication of data and/or information between the processor 52 and the network 68.

In one embodiment, the processor 52, the non-transitory computer readable medium 54, the input device 60, the output device 62, and the communications device 70 may be implemented together as a smartphone, a PDA, a tablet device, such as an iPad, a netbook, a laptop computer, a desktop computer, or any other computing device.

The non-transitory computer readable medium 54 may store the computer executable instructions 56, which may comprise a configuration and diagnostic program 56-1. The non-transitory computer readable medium 54 may also store other computer executable instructions 56-2 such as an operating system and application programs such as a word processor, for example. The computer executable instructions for the configuration and diagnostic program 56-1 and the other computer executable instructions 56-2 may be written in any suitable programming language, such as C++, C#, or Java, for example.

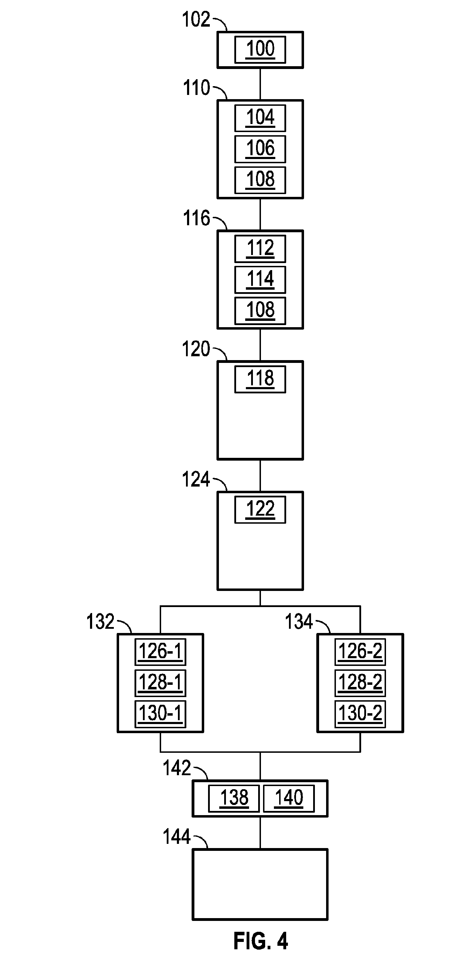

Referring now to Figure 4, shown therein is a diagrammatic representation of a method for calibrating the Coriolis meter 12 using the computer system 16. The Coriolis meter 12 can be calibrated by connecting a supply of inert gas 100 to the first process connection 30 or the second process connection 32 as shown by block 102. The inert gas 100 may be any group of gases or gas having known values for density at a specified pressure and temperature. For example, nitrogen, helium, neon, or argon may be used as the inert gas 100 in the calibration method. The supply of inert gas 100, in one embodiment, may serve to fill the first and second flow tubes 20 and 22 of the Coriolis meter 12 without providing a flow through the first and second flow tubes 20 and 22.

A first reference density 104 may be determined for the inert gas 100 at a first pressure 106 and a reference temperature 108 as shown by block 110. A second reference density 112 may be determined for the inert gas 100 at a second pressure 114 and the reference temperature 108 as shown by block 116. A first tube period 118 for the Coriolis meter 12 may be determined at the first pressure 106 and the reference temperature 108 as shown by block 120. A second tube period 122 for the Coriolis meter 12 may be determined at the second pressure 114 and the reference temperature 108 as shown by block 124. At least two test densities 126-1 - 126-2 and at least two test periods 128-1 - 128-2 may be measured at at least two test temperatures 130-1 - 130-2, respectively, at 132 and 134. From the first reference density 104, the second reference density 112, the first tube period 118, the second tube period, the at least two test densities 126-1 - 126-2, the at least two test periods 128-1 - 128-2, and the at least two temperatures 130-1 - 130-2, an offset 138 and a temperature correction factor 140 may be determined as shown by block 142. The offset 138 and the temperature correction factor 140 may then be associated with a particular Coriolis meter 12, as shown by block 144. For example, the configuration and diagnostic program may access or include a database including calibration information for a plurality of Coriolis meters 12. Each Coriolis meter 12 may be identified by a unique code. The offset 138 and the temperature correction factor 140 may be stored in the non-transitory computer readable medium 54 and identified by the unique codes so that the temperature correction factor 140 can be loaded into the core processor of a particular Coriolis meter 12 and subsequently used to calculate gas densities which are then corrected using the offset 138 for the Coriolis meter 12 being used.

The first reference density 104 may be determined experimentally for the density of the inert gas 100 at the first pressure 106 and the reference temperature 108. In one embodiment, the first pressure 106 may be 10 Bar. In this embodiment, the first reference density 104 may be determined by filling the first and second flow tubes 20 and 22 with the inert gas 100 and oscillating the first and second flow tubes 20 and 22. The core processor 14 may then calculate and record the first reference density 104 in relation to the first pressure 106 of 10 Bar and the reference temperature 108. Similarly, the second reference density 112 may be determined experimentally for the density of the inert gas 100 at the second pressure 114 and the reference temperature 108. In one embodiment, the second pressure 114 may be 100 Bar. The first reference density 104 and the second reference density 112 may also be determined experimentally through the use of another densitometer other than the Coriolis meter 12 undergoing the calibration process or through reference material relating to the density of the inert gas 100 at differing temperatures and pressures. For example, determining the density of the inert gas 100 can be determined from reference material using a suitable equation, such as Equation I: $PV = nZRT$ to determine the pressure and volume of the inert gas. In Equation I, P is the absolute pressure of the gas, V is the volume of the gas, n is the number of moles of the gas, R is the universal gas constant, T is the absolute temperature of the gas, and Z is the compressibility factor. Therefore, knowing the pressure, temperature, and volume, the density of the inert gas 100 may be deduced using the reference material. If the first and second reference densities 104 and 112, measured by the Coriolis meter 12, do not coincide with the first and second reference densities 104 and 112 as determined by another densitometer or reference material, the first and second reference densities 104 and 112 may be adjusted within the computer system 16 and the core processor 14. After determining the first reference density 104 by oscillation of the first and second flow tubes 20 and 22 filled with the inert gas 100 at the first pressure 106, determining the second reference density 112 by oscillation of the first and second flow tubes 20 and 22 filled with the inert gas 100 at the second pressure 114, and performing any adjustments, the first and second reference densities 104 and 112 may be received by the computer system 16. The computer system 16 may receive the first and second reference densities 104 and 112 via the input device 60, the communications device 70, or in any other suitable manner.

In one embodiment, the first tube period 118 may be determined by causing the inert gas 100 to fill the first and second flow tubes 20 and 22 of the Coriolis meter 12 to the first pressure 106. The first tube period 118 may then be measured by causing the drive coil 24 within the Coriolis meter 12 to oscillate the first and second flow tubes 20 and 22. The core processor 14 may then record the rate of oscillation of the first and second flow tubes 20 and 22 and transmit the rate of oscillation to the computer system 16. Similarly, in one embodiment, the second tube period 122 may be determined by filling the first and second flow tubes 20 and 22 with the inert gas 100 to the second pressure 114. The second tube period 122 may then be measured by causing the drive coil 24 to oscillate the first and second flow tubes 20 and 22, with the core processor 14 recording the rate of oscillation and transmitting the rate of oscillation to the computer system 16. In this embodiment, the reference temperature 108 may be maintained during measurement of the first tube period 118 and the second tube period 122 in order to prevent uncontrolled changes in pressure and density of the inert gas 100. The computer system 16 may receive the first tube period 118 and the second tube period 122 after their measurement by the core processor 14 via the input device 60, the communications device 70, or any other suitable manner.

In one embodiment, the first reference density 104 may be linked to the first tube period 118, such that the first tube period 118 may be determined at the time of determining the first reference density 104. For example, in one embodiment, as described above, the first tube period 118 may be determined while the inert gas 100 fills the first and second flow tubes 20 and 22 at a suitable pressure such as 10 Bar, to determine the first reference density 104. The computer system 16 may then link the first tube period 118 with the first reference density 104 such that the core processor 14 may associate the rate of oscillation of the first tube period 118 with the first reference density 104. Similarly, the second reference density 112 may be linked to the second tube period 122, such that the second tube period 122 may be determined at the time of determining the second reference density 112. As an example, in one embodiment, the second tube period 122 may be determined while the inert gas 100 fills the first and second flow tubes 20 and 22 at another suitable pressure, such as 100 Bar, to determine the second reference density 112. The computer system 16 may then link the second tube period 122 with the second reference density 112 such that the core processor 14 may associate the rate of oscillation of the second tube period 122 with the second reference density 112. The rate of oscillation of the first tube period 118 may therefore be characteristic of the inert gas 100 having the first reference density 104 and the rate of oscillation of the second tube period 122 may be characteristic of the inert gas 100 having the second reference density 112.

After determining the first and second reference densities 104 and 112 and the first and second tube periods 118 and 112, the at least two test densities 126-1 - 126-2 may be determined. The at least two test densities 126-1 - 126-2 may be determined experimentally, as described for the first and second reference densities 104 and 112 at a specified pressure and the at least two test temperatures 130-1 - 130-2. In determining the first of the test period 128-1, the first and second flow tubes 20 and 22 may be filled with the inert gas 100 to a predetermined pressure and at the first of the at least two test temperatures 130-1. The first of the at least two test periods 128-1 may then be measured similarly to measuring the first tube period 118, wherein the drive coil 24 within the Coriolis meter 12 is caused to oscillate the first and second flow tubes 20 and 22. The core processor 14 may then record the rate of oscillation of the first and second flow tubes 20 and 22 and transmit the rate of oscillation to the computer system 16. The computer system 16 may then receive the first of the at least two test densities 126-1, the first of the at least two test periods 128-1, and the first of the at least two test temperatures 130-1. The second of the at least two test densities 126-2 and the second of the at least two test periods 128-2 may be determined as described above by using the predetermined pressure, and the second temperatures 130-2, which is then transmitted to the computer system 16.

Constant parameters may also be determined to calibrate the Coriolis meter 12. A coefficient A may be calculated by Equation II: A= $(D_2 - D_1) / (K_2^2 - K_1^2)$. A coefficient B may be calculated by Equation III: B= $-10^{-4} ((D_2 - D_1) / (K_2^2 - K_1^2))$. A coefficient C may be calculated by Equation IV: C= $- K_1^2 ((D2 - D_1) / (K_2^2 - K_1^2)) + D_1$. In Equations II, III, and IV, $D_1$ may be the first reference density 104, $D_2$ may be the second reference density 112, $K_1$ is the first tube period 118, and $K_2$ may be the second tube period 122. Using coefficients A, B, and C, and the at least two test densities 126-1 - 126-2, the at least two test periods 128-1 - 128-2, and the at least two test temperatures 130-1 - 130-2, a temperature correction factor 140 may be deduced from Equation V: $\rho_{coriolis} = A*K^2 + B*D_T*K^2*T_{Cor} + C$. In Equation VI, $\rho_{coriolis}$ is a density which may be one of the at least two test densities 126-1 - 126-2, K is a tube period which may be one of the at least two test periods 128-1 - 128-2 at which $\rho_{coriolis}$ was measured, $T_{Cor}$ is a temperature which may be one of the at least two test temperatures 130-1 - 130-2 at which $\rho_{coriolis}$ was measured, and $D_T$ is the temperature correction factor 140. The offset 138 may be deduced from Equation V: $\rho_{Coriolis}$

$$\rho_{Coriolis_D} = A*K^2 + B*D_T*K^2*T_{Cor} + C + D.$$ In Equation V, $\rho_{Coriolis_D}$ may be one of the at least two test densities 126-1 - 126-2, K is a tube period which may be one of the at least two tube periods 128-1 - 128-2 at which $\rho_{Coriolis_D}$ was measured, $T_{Cor}$ may be one of the at least two test temperatures 130-1 - 130-2 at which $\rho_{Coriolis_D}$ was measured, $D_T$ is the temperature correction factor 140 deduced from Equation V, and D is the offset 138.

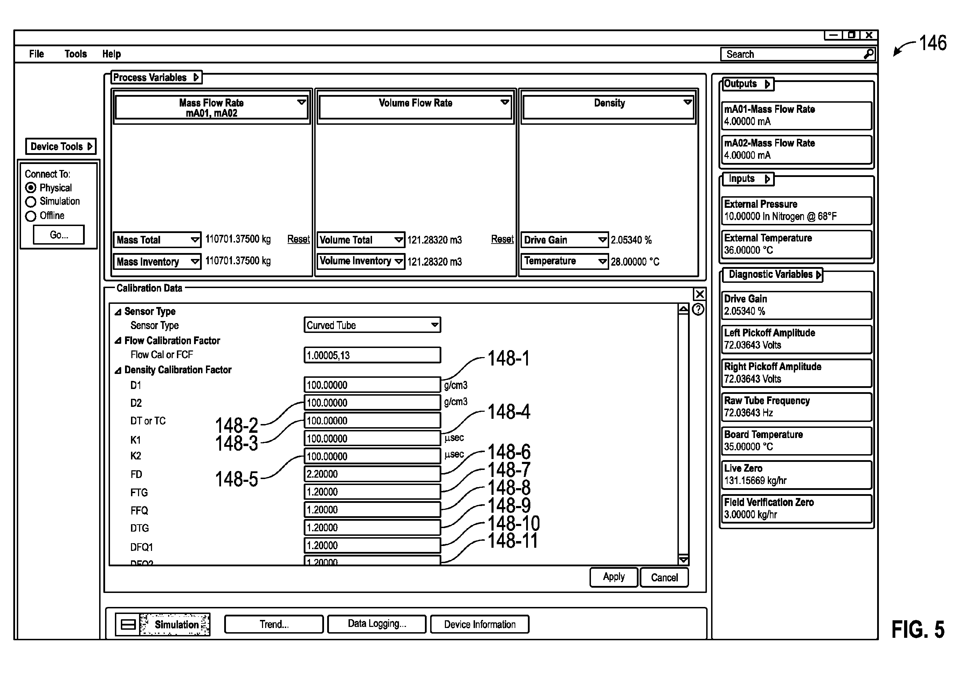

Referring now to Figure 5, shown therein is an embodiment of a screen 146 created by the computer executable instructions 56-1 and displayed on the output device 62. The computer executable instructions 56-1 may provide a graphical user interface (GUI), as shown by the screen 146, with a text based interface, a combination thereof, or any other suitable interface through which a user and the computer system 16 may access data indicative of the calibration method discussed above. The computer system 16 may provide a plurality of text fields 148-1 - 148-11 on the screen 146 for entering data obtained from the calibration method described above. The text fields 148-1 - 148-11 may be filled manually or automatically filled by the computer system 16 through data received from the core processor 14, or a combination thereof. After entering the calibration data into the text fields 148-1 - 148-11 and the offset 138 and the temperature correction factor 140 have been determined; the computer system 16 may associate the offset 138 and the temperature correction factor 140 with the Coriolis meter 12 in the non-transitory computer readable medium 54 using a unique identification code for the Coriolis meter 12. The computer system 16 may receive or create a unique identification code for each Coriolis meter 12 which is calibrated and may store the unique identification code, the offset 138, and the temperature correction factor 140 for each of the calibrated Coriolis meters 12 in the non-transitory computer readable medium 54, a relational database, a server, or the like, for example. The unique identification code, offset 138, and temperature correction factor 140 may be recalled by the computer system 16 for re-calibration of the Coriolis meter 12 or for adjusting density measurements made by the Coriolis meter 12, for example. In one embodiment, the association of the temperature correction factor 140 with the Coriolis meter 12 may cause the core processor 14 to store values for the temperature correction factor 140 into circuitry of the Coriolis meter 12, such as the non-transitory computer readable medium 42 or other circuitry of the Coriolis meter 12. In this embodiment, the association of the temperature correction factor 140 may cause the core processor to provide density values measured by the core processor 14 for fluids passing through the Coriolis meter 12 that are adjusted by the temperature correction factor 140 as in Equation IV, shown above. The density values measured by the core processor 14 may then adjusted by the offset 138 as shown above in Equation VI.

In another embodiment, the association of the offset 138 and the temperature correction factor 140 with the Coriolis meter 12 may cause the processor 52 to store the offset 138 and the temperature correction factor 140 in the non-transitory computer readable medium 54 of the computer system 16. In this embodiment, the offset 138 and the temperature correction factor 140 may be associated with the unique identification code for the Coriolis meter 12 which may also be stored in the non-transitory computer readable medium 54, for instance in a relational database, for example. Further, in this embodiment, the non-transitory computer readable medium 54 may be accessible by the core processor 14 of the Coriolis meter 12. The core processor 14 may access the non-transitory computer readable medium 54 to retrieve the offset 138 and the temperature correction factor 140 to subsequently adjust density values measured by the core processor 14 for fluids passing through the Coriolis meter 12.

In another embodiment, the association of the offset 138 and the temperature correction factor 140 with the Coriolis meter 12 may cause the processor 52 to store the offset 138, the temperature correction factor 140, and the unique identification code in the non-transitory computer readable medium 54 of the computer system 16, a database, a server, or the like. The non-transitory computer readable medium 54 may contain computer executable instructions that, when executed by the processor 52, causes the processor 52 to receive a unique identification code for the Coriolis meter 12, retrieve the offset 138 associated with the unique identification code for the Coriolis meter 12 from the non-transitory computer readable medium 54, receive at least one density measurement from the Coriolis meter 12, and apply the offset 138 to the at least one density measurement from the Coriolis meter 12. The processor 52 may then output the at least one density measurement, with the offset 138 applied, to a user.

The processor 52 may receive the unique identification code from an input into a text field, a signal from the core processor 14 of the Coriolis meter 12, or any other suitable input, for example. The processor 52 may retrieve the offset 138 associated with the unique identification code of the Coriolis meter 12 from non-transitory computer readable medium 54 local to the processor, remotely located non-transitory computer readable medium, a database located either remotely or local to the processor, or a server, for example. Retrieving the offset 138 may be performed by the processor 52 performing a search of the non-transitory computer readable medium 54, for example, or may be retrieved from a relational database, or the like using the unique identification code of the Coriolis meter 12 as a reference. The processor 52 may then receive at least one density measurement from the Coriolis meter 12 through a direct communications link between the computer system 16 and the core processor 14, through a wireless communications device, or any other suitable method. The processor 52 may then apply the offset 138 to the at least one density measurement.

The preceding description has been presented with reference to some embodiments. Persons skilled in the art and technology to which this disclosure pertains will appreciate that alterations and changes in the described structures and methods of operation can be practiced without meaningfully departing from the principle, and scope of this application. Accordingly, the foregoing description should not be read as pertaining to the precise structures described and shown in the accompanying drawings, but rather should be read as consistent with and as support for the following claims, which are to have their fullest and fairest scope.

Furthermore, the description in the present application should not be read as implying that any particular element, step, or function is an element requisite in the claim scope. The scope of patented subject matter is defined by the allowed claims. Moreover, these claims are not intended to invoke paragraph six of 35 USC § 112 unless the exact words "means for" are followed by a participle. The claims as filed are intended to be as comprehensive as possible, and no subject matter is intentionally relinquished, dedicated, or abandoned

## Claims

1.   A computer system, comprising:

   a processor; and
   a computer readable medium coupled to the processor, the computer readable medium being non-transitory and local to the processor, the computer readable medium storing computer executable instructions, that when executed by the processor causes the processor to:

      receive a first reference density measured at a first pressure and a second reference density measured at a second pressure, the first reference density and the second reference density measured at a reference temperature;
      receive a first tube period measured at the first pressure for a Coriolis meter and a second tube period measured at the second pressure for the Coriolis meter, the first tube period and the second tube period measured at the reference temperature;
      receive at least two test densities and at least two test periods, the at least two test densities and the at least two test periods measured at at least two test temperatures; and
      associate an offset and a temperature correction factor with the Coriolis meter using a unique identification code for the Coriolis meter.

2.   The computer system of claim 1, wherein the first reference density and the second reference density are densities of an inert gas.

3.   The computer system of claim 1, wherein the offset and the temperature correction factor are based on the first reference density, the second reference density, the first tube period, the second tube period, the at least two test densities, the at least two test periods, and the at least two test temperatures.

4.   The computer system of claim 3, wherein coefficients A, B, and C are calculated from the first reference density, the second reference density, the first tube period, and the second tube period.

5.   The computer system of claim 4, wherein the coefficient A is calculated according to an equation $A = (D_2 - D_1 / K_2^2 - K_1^2)$, wherein $D_1$ is the first reference density, $D_2$ is the second reference density, $K_1$ is the first tube period, and $K_2$ is the second tube period.

6.   The computer system of claim 4, wherein the coefficient B is calculated according to an equation $B = -10^{-4} (D_2 - D_1$

/ $K_2^2 - K_1^2$), wherein $D_1$ is the first reference density, $D_2$ is the second reference density, $K_1$ is the first tube period, and $K_2$ is the second tube period.

7. The computer system of claim 4, wherein the coefficient C is calculated according to an equation C= - $K_1^2$ ($D_2$ - $D_1$ / $K_2^2 - K_1^2$) + $D_1$, wherein $D_1$ is the first reference density, $D_2$ is the second reference density, $K_1$ is the first tube period, and $K_2$ is the second tube period.

8. The computer system of claim 4, wherein the temperature correction factor is calculated according to an equation $\rho_{coriolis} = A{*}K^2 + B{*}D_T{*}K^2{*}T_{Cor} + C$, wherein $\rho_{coriolis}$ is a density, K is a tube period, $T_{Cor}$ is a temperature, and $D_T$ is the temperature correction factor.

9. The computer system of claim 8, wherein the offset is calculated according to an equation $\rho_{CoriolisD} = A{*}K^2 + B{*}D_T{*}K^2{*}T_{Cor} + C + D$, wherein D is the offset and $\rho_{CoriolisD}$ is a density adjusted for the temperature correction factor.

10. The computer system of claim 1, wherein the computer readable medium stores computer executable instructions, that when executed by the processor causes the processor to store the offset within the computer readable medium and the temperature correction factor in a core processor of the Coriolis meter.

11. A method for calibrating a Coriolis meter, comprising:

   determining a first reference density for an inert gas measured at a first pressure and a second reference density for the inert gas measured at a second pressure, the first reference density and the second reference density determined at a reference temperature;
   determining a first tube period for a Coriolis meter measured at the first pressure and a second tube period for the Coriolis meter measured at the second pressure, the first tube period and the second tube period determined at the reference temperature;
   recording at least two test densities and at least two test periods, the at least two test densities and the at least two test periods measured at at least two test temperatures;
   determining an offset and a temperature correction factor; and
   storing the temperature correction factor within circuitry of the Coriolis meter.

12. The method of claim 11, wherein the offset and the temperature correction factor are based on the first reference density, the second reference density, the first tube period, the second tube period, the at least two test densities, the at least two test periods, and the at least two test temperatures.

13. The method of claim 11, further comprising calculating coefficients A, B, and C from the first reference density, the second reference density, the first tube period, and the second tube period.

14. The method of claim 13, wherein the coefficient A is calculated according to an equation A= ($D_2$ - $D_1$ / $K_2^2 - K_1^2$), wherein $D_1$ is the first reference density, $D_2$ is the second reference density, $K_1$ is the first tube period, and $K_2$ is the second tube period.

15. The method of claim 13, wherein the coefficient B is calculated according to an equation B= $-10^{-4}$ ($D_2$ - $D_1$ / $K_2^2 - K_1^2$), wherein $D_1$ is the first reference density, $D_2$ is the second reference density, $K_1$ is the first tube period, and $K_2$ is the second tube period.

16. The method of claim 13, wherein the coefficient C is calculated according to an equation C= - $K_1^2$ ($D_2$ - $D_1$ / $K_2^2 - K_1^2$) + $D_1$, wherein $D_1$ is the first reference density, $D_2$ is the second reference density, $K_1$ is the first tube period, and $K_2$ is the second tube period.

17. The method of claim 13, wherein the temperature correction factor is calculated according to an equation $\rho_{coriolis} = A{*}K^2 + B{*}D_T{*}K^2{*}T_{Cor} + C$, wherein $\rho_{coriolis}$ is a density, K is a tube period, $T_{Cor}$ is a temperature, and $D_T$ is the temperature correction factor.

18. The method of claim 17, wherein the offset is calculated according to an equation $\rho Coriolis_D = A{*}K^2 + B{*}D_T{*}K^2{*}T_{Cor} + C + D$, wherein D is the offset and $\rho Coriolis_D$ is a density adjusted for the temperature correction factor.

19. A computer system, comprising:

a processor; and
a computer readable medium coupled to the processor, the computer readable medium being non-transitory, the computer readable medium storing computer executable instructions, that when executed by the processor causes the processor to:

receive a unique identification code for a Coriolis meter;
retrieve an offset associated with the unique identification code for the Coriolis from the computer readable medium;
receive at least one density measurement from the Coriolis meter; and
apply the offset to the at least one density measurement from the Coriolis meter.

FIG. 1

**FIG. 2**

**FIG. 3**

102 ── | 100 |

110 ── | 104 |
| 106 |
| 108 |

116 ── | 112 |
| 114 |
| 108 |

120 ── | 118 |

124 ── | 122 |

132 ── | 126-1 |
| 128-1 |
| 130-1 |

134 ── | 126-2 |
| 128-2 |
| 130-2 |

142 ── | 138 | 140 |

144 ──

**FIG. 4**

FIG. 5

Europäisches
Patentamt

European
Patent Office

Office européen
des brevets

**EUROPEAN SEARCH REPORT**

Application Number

EP 12 30 6712

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 687 100 A (BUTTLER MARC ALLAN [US] ET AL) 11 November 1997 (1997-11-11) * column 5, line 1 - column 6, line 30 * * column 9, line 36 - line 55; figure 2 * ----- | 1-19 | INV. G01F25/00 G01F1/84 G01F15/04 |
| A | US 6 732 570 B2 (FRANCISCO EDWARD E [US] FRANCISCO JR EDWARD E [US]) 11 May 2004 (2004-05-11) * column 3, line 50 - column 4, line 10 * ----- | 1-19 | |
| A | US 7 523 639 B2 (HAYS PAUL J [US]) 28 April 2009 (2009-04-28) * column 1, line 23 - line 27 * * column 2, line 36 - line 40 * * column 4, line 16 - column 5, line 18 * * column 5, line 50 - line 62 * ----- | 1-10,19 | |
| A | US 6 327 915 B1 (VAN CLEVE CRAIG BRAINERD [US] ET AL) 11 December 2001 (2001-12-11) * column 16 * ----- | 4-9, 13-18 | |
| A | US 2007/271070 A1 (DMYTRIW ANTHONY M [US] ET AL) 22 November 2007 (2007-11-22) * paragraph [0016] * ----- | 10,19 | TECHNICAL FIELDS SEARCHED (IPC) G01F G01N |

The present search report has been drawn up for all claims

| Place of search | Date of completion of the search | Examiner |
|---|---|---|
| The Hague | 14 August 2013 | Bourhis, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**   EP 12 30 6712

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2013

| Patent document cited in search report | | | Publication date | Patent family member(s) | | Publication date |
|---|---|---|---|---|---|---|
| US 5687100 | A | | 11-11-1997 | BR 9710463 A | | 17-08-1999 |
| | | | | CA 2257817 A1 | | 22-01-1998 |
| | | | | CN 1225722 A | | 11-08-1999 |
| | | | | DE 69703981 D1 | | 01-03-2001 |
| | | | | DE 69703981 T2 | | 23-05-2001 |
| | | | | EP 0912882 A1 | | 06-05-1999 |
| | | | | HK 1021412 A1 | | 09-01-2004 |
| | | | | JP 3228944 B2 | | 12-11-2001 |
| | | | | JP 2000505894 A | | 16-05-2000 |
| | | | | KR 20000023822 A | | 25-04-2000 |
| | | | | RU 2177610 C2 | | 27-12-2001 |
| | | | | US 5687100 A | | 11-11-1997 |
| | | | | WO 9802725 A1 | | 22-01-1998 |
| US 6732570 | B2 | | 11-05-2004 | NONE | | |
| US 7523639 | B2 | | 28-04-2009 | AR 046735 A1 | | 21-12-2005 |
| | | | | AU 2003297868 A1 | | 14-07-2005 |
| | | | | BR 0318620 A | | 17-10-2006 |
| | | | | CA 2547348 A1 | | 07-07-2005 |
| | | | | CN 1879011 A | | 13-12-2006 |
| | | | | EP 1709402 A1 | | 11-10-2006 |
| | | | | HK 1100970 A1 | | 04-12-2009 |
| | | | | JP 4787618 B2 | | 05-10-2011 |
| | | | | JP 2007521470 A | | 02-08-2007 |
| | | | | KR 20060132635 A | | 21-12-2006 |
| | | | | MX PA06006361 A | | 23-08-2006 |
| | | | | US 2007193334 A1 | | 23-08-2007 |
| | | | | WO 2005062003 A1 | | 07-07-2005 |
| US 6327915 | B1 | | 11-12-2001 | AR 024618 A1 | | 16-10-2002 |
| | | | | AU 767659 B2 | | 20-11-2003 |
| | | | | AU 5735600 A | | 22-01-2001 |
| | | | | BR 0011986 A | | 13-10-2004 |
| | | | | CA 2376615 A1 | | 11-01-2001 |
| | | | | CN 1371470 A | | 25-09-2002 |
| | | | | EP 1194750 A2 | | 10-04-2002 |
| | | | | HK 1047314 A1 | | 16-12-2005 |
| | | | | JP 4495380 B2 | | 07-07-2010 |
| | | | | JP 2003503723 A | | 28-01-2003 |
| | | | | MX PA02000145 A | | 30-07-2002 |
| | | | | PL 352687 A1 | | 08-09-2003 |
| | | | | RU 2235295 C2 | | 27-08-2004 |
| | | | | US 6327915 B1 | | 11-12-2001 |
| | | | | WO 0102816 A2 | | 11-01-2001 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 12 30 6712

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2013

| Patent document cited in search report | Publication date | Patent family member(s) | | Publication date |
|---|---|---|---|---|
| US 2007271070 A1 | 22-11-2007 | CN | 101490514 A | 22-07-2009 |
| | | EP | 2018526 A2 | 28-01-2009 |
| | | US | 2007271070 A1 | 22-11-2007 |
| | | WO | 2007137023 A2 | 29-11-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5029482 A